(19) Europäisches Patentamt
European Patent Office
Office européen des brevets

(11) EP 2 993 623 B1

(12) EUROPEAN PATENT SPECIFICATION

(45) Date of publication and mention
of the grant of the patent:
**16.08.2017 Bulletin 2017/33**

(51) Int Cl.:
***G06K 9/62*** (2006.01)

(21) Application number: **14461566.3**

(22) Date of filing: **08.09.2014**

(54) **Apparatus and method for multi-object detection in a digital image**

Vorrichtung und Verfahren zur Erkennung mehrerer Objekte auf einem Digitalbild

Appareil et procédé de détection d'objets multiples dans une image numérique

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**09.03.2016 Bulletin 2016/10**

(73) Proprietor: **Lingaro Sp. z o.o.
02-595 Warszawa (PL)**

(72) Inventors:
• **Kurzejamski, Grzegorz
02-595 Warszawa (PL)**
• **Zawistowski, Jacek
02-595 Warszawa (PL)**
• **Sarwas, Grzegorz
02-595 Warszawa (PL)**

(74) Representative: **Blonski, Pawel
EP-Patent
Konstruktorow 30/2
65-119 Zielona Gora (PL)**

(56) References cited:
**EP-A1- 2 469 468       US-A1- 2008 013 836
US-A1- 2013 060 765     US-A1- 2014 233 860**

• **GUSTAVO CARNEIRO ET AL: "Flexible Spatial
Configuration of Local Image Features", IEEE
TRANSACTIONS ON PATTERN ANALYSIS AND
MACHINE INTELLIGENCE, IEEE COMPUTER
SOCIETY, USA, vol. 29, no. 12, 1 December 2007
(2007-12-01), pages 2089-2104, XP011195554,
ISSN: 0162-8828, DOI: 10.1109/TPAMI.2007.1126**
• **STEFAN ZICKLER ET AL: "Detection and
Localization of Multiple Objects", HUMANOID
ROBOTS, 2006 6TH IEEE-RAS INTERNATIONAL
CONFERENCE ON, IEEE, PI, 1 December 2006
(2006-12-01), pages 20-25, XP031052993, ISBN:
978-1-4244-0199-4**

**Description**

The present invention relates to an apparatus and method for multi-object detection in a digital image. Object detection is a common computer technology related to computer vision and image processing that deals with detecting instances of semantic objects in digital images and frames of digital video materials. The present method is best suited for detecting not only a single but multiple object instances in a digital image.

Application of multi-object detection in a digital image takes place for example in case of finding products on shelves, counting of products, finding standardized identifiers of packaging in warehouses or scanning products in order to obviate a need for bar codes.

Presently many of practically used object detection and identification systems, use feature points matching. Object detection executed with a use of local features is well known in computer vision. There are dozens of features that come with their cons and pros. Feature points, as local descriptors, have a significant ability to describe objects appearance in different environmental conditions. There are many methods for matching two sets of feature points and calculating the object similarity measure. Most of them work well only in case where there is only one instance of the object in a given analyzed scene. Systems for multi-object detection incorporate additional mechanisms based on global analysis of feature points clusters.

There are several feature points models known from prior art, that contain rotation, scale and contrast data. The state-of-the-art studies still use SIFT (Lowe, David G. (1999). "Object recognition from local scale-invariant features". Proceedings of the International Conference on Computer Vision 2. pp. 1150-1157) and SURF (Herbert Bay, Andreas Ess, Tinne Tuytelaars, Luc Van Gool "SURF: Speeded Up Robust Features", Computer Vision and Image Understanding (CVIU), Vol. 110, No. 3, pp. 346-359, 2008) as the best examples.

There are also known attempts to incorporate color data into SIFT, SURF and its derivatives as PCA-SIFT (Ke, Y., Sukthankar, R., "PCA-SIFT: A More Distinctive Representation for Local Image Descriptors", Computer Vision and Pattern Recognition, 2004), Affine-SIFT (Jean-Michel Morel, Guoshen Yu, ASIFT: A New Framework for Fully Affine Invariant Image Comparison, SIAM J. IMAGING SCIENCES, 2009 Society for Industrial and Applied Mathematics, Vol. 2, No. 2, pp. 438-469).

It's common to filter out weak point connections after a matching process based on distance thresholding. If there is a color difference metric present, it can be done with an additional use of color information.

Multi-object detection systems using local features often create a multi-dimensional voting space. Each feature votes for a particular object occurrence in the image. In particular it votes on object's center and its global features, such as size and rotation. Voting space may be analyzed to create vote clusters, which potentially contain votes on one object instance. Each cluster may be accepted or rejected. Different measures for that purpose have been created.

The disclosures of:

- A Fast Probabilistic Model for Hypothesis Rejection in SIFT-Based Object Recognition, Patricio Loncomilla and Javier Ruiz-del-Solar Department of Electrical Engineering, Universidad de Chile; and

- Distinctive Image Features from Scale-Invariant Keypoints, David G. Lowe, Computer Science Department, University of British Columbia

use PCA-SIFT in their detection approach. Feature points are compared by Brute Force, Best Bin First or FLANN algorithms with L2 metric.

In turn the prior art disclosure of "Combining Harris Interest Points and the SIFT Descriptor for Fast Scale-Invariant Object Recognition, Pedram Azad, Tamim Asfour, Rudiger Dillmann, Institute for Anthropomatics, University of Karlsruhe, Germany" creates a 4D voting space and uses combination of Hough, RANSAC and Least Squares Homography Estimation in order to detect and accept potential object instances.

The Hough-based mechanisms often use simplistic acceptance term based on number of votes only. The RANSAC may incorporate more advanced mathematical criteria based on transformation estimation error.

Another known disclosure of "Detection of Multiple Deformable Objects using PCA-SIFT, Stefan Zickler and Alexei Efros, Computer Science Department, Carnegie Mellon University" uses angle differences criterion in addition to RANSAC mechanisms and vote number threshold.

In turn "Detection and Localization of Multiple Objects, Stefan Zickler and Manuela M. Veloso, Computer Science Department, Carnegie Mellon University" uses custom probabilistic model in addition to Hough algorithm while "Object detection method - EP 2469468 A1" uses feature vectors distance to calculate similarity score to choose the most similar pattern from query data.

There are very few systems that support detection of multiple object instances of different types. Most of them are heavily parametrized and in practice require constant adaptation of parameters to the input data. It would thus be advantageous to simplify those known processes.

In view of the prior art, it would be advantageous to provide a multi-object detection apparatus having enhanced performance and robustness.

## SUMMARY AND THE OBJECTS OF THE INVENTION

Objects of the present invention are

(A) a method for object detection in a digital image;
(B) a computer program comprising program code means for performing all the steps of the computer-implemented method according to the present invention when said program is run on a computer;
(C) a computer readable medium storing computer-executable instructions performing all the steps of the computer-implemented method according to the present invention when executed on a computer; and
(D) a system for object detection in a digital image,

as per the appended claims.

These and other objects of the invention presented herein are accomplished by providing an apparatus and method for multi-object detection in a digital image. Further details and features of the present invention, its nature and various advantages will become more apparent from the following detailed description of the preferred embodiments shown in a drawing, in which:

Fig. 1 presents a top level view of the method;

Fig. 2 presents section #1 of the method;

Fig. 3 presents an exemplary approach to pattern resizing;

Fig. 4 shows image features extraction;

Fig. 5 depicts defines in details step #1C of the method;

Fig. 6 defines in details step #1D of the method;

Fig. 7 shows in details step #1E of the method;

Fig. 8 presents in details step #2 of the method;

Fig. 9 presents in details step #2A of the method;

Fig. 10 presents in details step #2B of the method;

Fig. 11 presents in details step #2D of the method;

Fig. 12 presents in details step #2E of the method;

Fig. 13 presents in details step #3 of the method;

Fig. 14 presents a system according to the present invention; and

Fig. 15A-F present exemplary input image, a pattern to be found in this input image and processing results available during execution of the method according to the present invention.

NOTATION AND NOMENCLATURE

Some portions of the detailed description, which follows, are presented in terms of data processing procedures, steps or other symbolic representations of operations on data bits that can be performed on computer memory. Therefore, a computer executes such logical steps thus requiring physical manipulations of physical quantities.

Usually these quantities take the form of electrical or magnetic signals capable of being stored, transferred, combined, compared, and otherwise manipulated in a computer system. For reasons of common usage, these signals are referred to as bits, packets, messages, values, elements, symbols, characters, terms, numbers, or the like.

Additionally, all of these and similar terms are to be associated with the appropriate physical quantities and are merely convenient labels applied to these quantities. Terms such as "processing" or "creating" or "transferring" or "executing" or "determining" or "detecting" or "obtaining" or "selecting" or "calculating" or "generating" or the like, refer to the action and processes of a computer system that manipulates and transforms data represented as physical (electronic) quantities within the computer's registers and memories into other data similarly represented as physical quantities within the memories or registers or other such information storage.

A computer-readable (storage) medium, such as referred to herein, typically may be non-transitory and/or comprise a non-transitory device. In this context, a non-transitory storage medium may include a device that may be tangible, meaning that the device has a concrete physical form, although the device may change its physical state. Thus, for example, non-transitory refers to a device remaining tangible despite a change in state.

DESCRIPTION OF EMBODIMENTS

The aim of the present invention is detection of multiple objects in a digital image. The input of the system is an image to be processed (scanned or otherwise analyzed) and at least one pattern i.e. the object(s) to be found. A pattern is a digital, graphical representation of an object.

It is not known a priori whether the image to be processed comprises any instances of objects. It is however, known that the present invention is best suited for detecting of multiple object instances and also allows for decreasing the number of false detections.

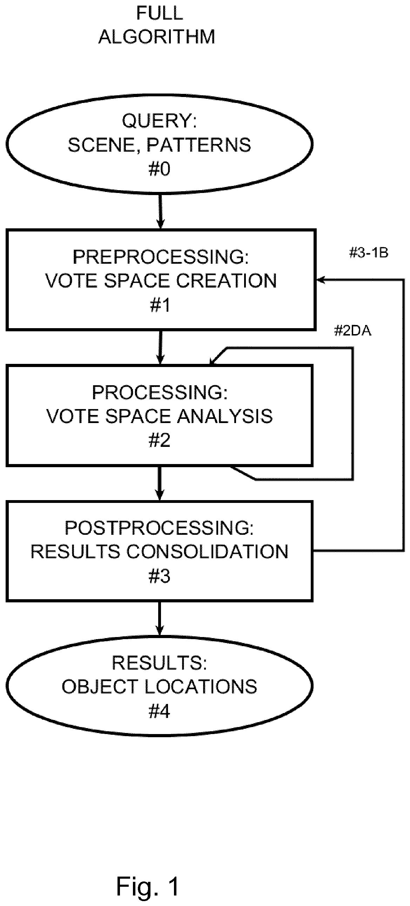

A top level view of the method has been shown in Fig. 1. It comprises three processing sections #1, #2 and #3 and two elements comprising a definition of input (QUERY) as well as output (RESULTS).

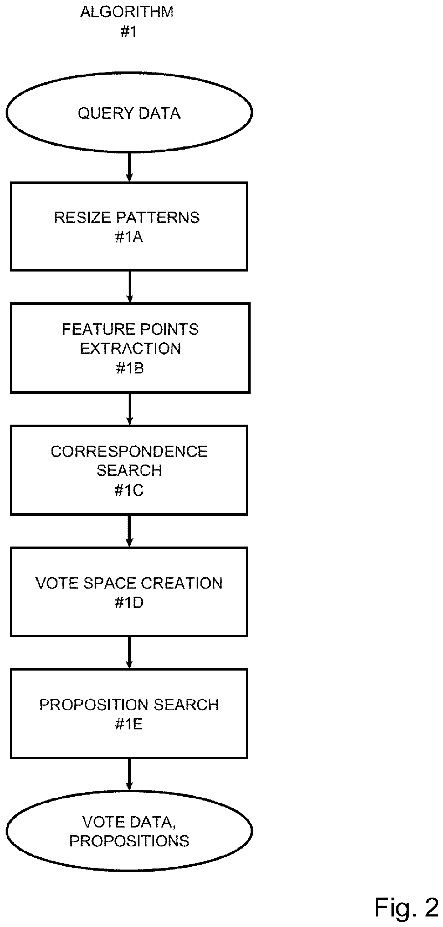

The first section #1 of the method has been depicted in more details in Fig. 2. Its purpose is to create a voting space for each pattern.

Voting-based methods work by representing the image with a set of voting elements such as interest points, pixels, patches or segments that vote for the values of parameters that describe the object instance.

According to the present invention, the voting space is a set of votes wherein each vote of the set identifies a certain location of presence of an object (a pattern) in the image to be processed. The votes also comprise additional data, such as object size, rotation, probability, adjacency (defined in the following specification) etc. Due to the fact that there is not any guarantee that all votes identify appropriate object or location, rotation, size etc., the voting space must be subject to a detailed analysis.

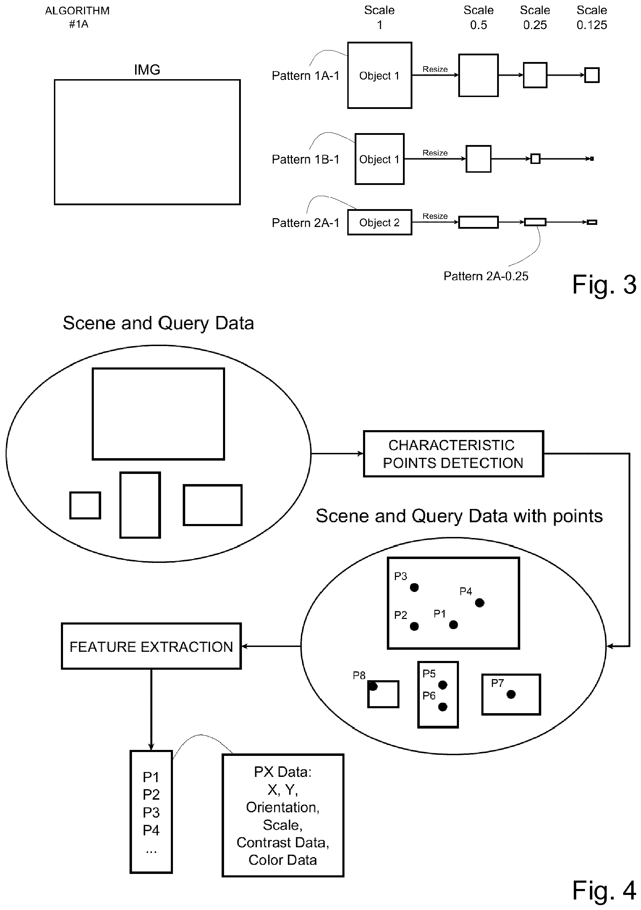

Each pattern image in the QUERY can be resized to generate multiple patterns of different sizes (step #1A). An exemplary approach to pattern resizing is shown in Fig. 3, wherein there are three patterns 1 A-1, 1 B-1 and 2A-1, which are scaled down according to three scales: 0,5, 0,25 and 0,125. It is to be understood however, that other scales as well as other number of generated scaled patterns than three may be applied.

Having a set of patterns (including the resized ones) and the input image, where the search must be conducted (a scene), the method finds characteristic points in each of the graphical images in the QUERY. The conditions for being considered a characteristic point depend on configuration of particular detection methods such as SIFT or SURF.

Other examples of characteristic points detectors include but are not limited to: ORB, MSER. According to the present invention, the characteristic points must comprise information regarding scale and rotation and information not dependent on scale and rotation allowing for defining a distance metrics between two characteristic points. In case of SIFT it is a vector of data describing arrangement of gradients around a characteristic point.

When the identification of characteristic points is complete, the process extracts features from locality of these points in corresponding images (step #1 B). Features of certain points contain position, scale, rotation, color and contrast data as shown in details in Fig. 4.

Fig. 4 depicts all graphics data of the Query and Scene being processed by a feature points detection algorithm. The feature points detection algorithm comprises two stages, namely CHARACTERISTIC POINTS DETECTION and FEATURE EXTRACTION. Each graphics data in Query and a Scene are processed independently to retrieve sets of characteristic points in each image. All of the extracted points create a global set of points $P = \{P1, P2, P3, ...\}$. Each point is then processed to create its feature description data, which comprise position in the respective image (X, Y), scale, orientation, color and contrast data.

Subsequently, at step #1 C, the characteristic points in the analyzed image, with their features, can be matched against a set of characteristic points in each pattern image in the QUERY.

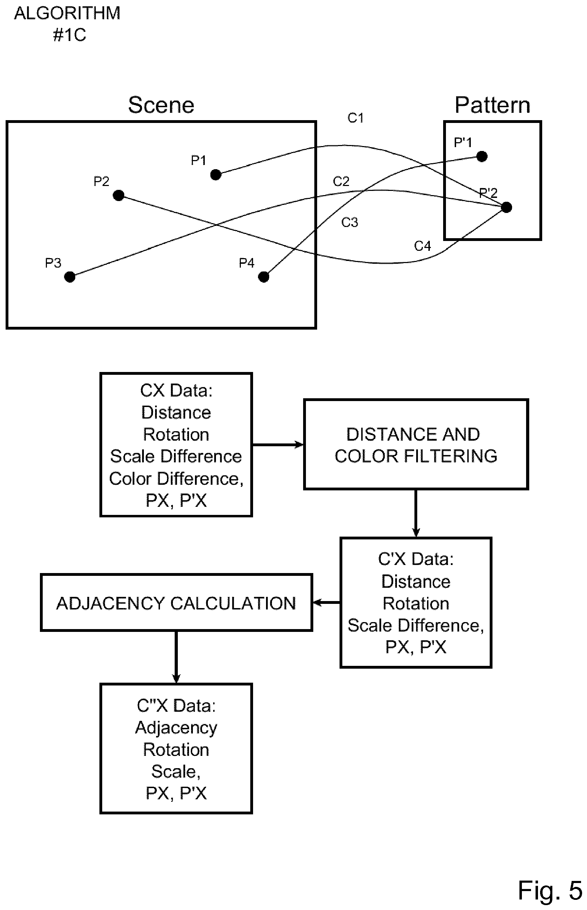

As shown in details in Fig. 5, points correspondences $C = \{C1, C2, C3, C4\}$ contain calculated differences of scale, rotation, color difference and contrast data distance. Each correspondence comprises all the data of the corresponding feature points described as PX and P'X. Each points correspondence can be considered as a vote for a particular pattern with a particular position, scale and rotation. The method may select only the best correspondences based on contrast data difference thresholding and color data difference thresholding.

Color data difference is a metric of color space which typically is a distance function assuming all data of a given pixel in a given color space (eg. RGB, HSV, L*a*b*, etc.).

Each correspondence may be processed in order to obtain an adjacency feature by transforming its contrast data difference with a specific function. Adjacency is used as a value strictly related to a logic of detection process and is interpreted as a level of match compliance. Adjacency values should be normalized to achieve the best data coherence. This step is depicted as a ADJACENCY CALCULATION in Fig. 5.

The characteristic points metric (such as the one used for SIFT vectors) gives usually an abstract value, which does not have a simple logical interpretation for humans. It cannot be determined whether the distance of SIFT vectors equal to 10, for two characteristic points, means that they are very similar or not. Thus, only comparison of distances has a logical meaning, i.e., "those 2 points are more different from each other than those (other) two points."

There is used Adjacency feature comparison instead of a standard feature vectors distance comparison to adjust further rejection mechanisms for humans perception. For example, it may be defined that corresponding points, which have adjacency lower than the average adjacency of all pairs are discarded.

For example a Contrast Data Thresholding function may be defined as follows:

$D(p1, p2)$ - decision function (points correspondence pair (plp2) is kept or discarded)

$dist(p1, p2)$ - distance function of feature points algorithms (for example SIFT vectors L2 distance)

$MIN(C), MAX(C)$ - function returning correspondence from C group with, respectively, minimal and maximal value of distance calculated with $dist(p1, p2)$ where $p1, p2 \in c, c \in$ C.

$$thr = \frac{MIN(C) + MAX(C)}{2}$$

$$D(p1, p2) = \begin{cases} 1, \wedge\ dist(p1, p2) \leq thr \\ 0, \wedge\ dist(p1, p2) > thr \end{cases}$$

wherein C is a complete set of pairs of corresponding points obtained by executing the KNN algorithm (k-nearest neighbours).

It may therefore be determined that a pair of points with a distance "1" is much more certain than a pair with a distance of "10". The metric may also take into account color data difference.

A linear operator for transforming feature points distance to an adjacency value, may be defined as follows:

$$Adjacency(p1, p2) = 1.0f - \left(\frac{dist(p1, p2)}{MatchThreshold}\right)^2$$

wherein:

$p_1, p_2$ - is a pair of characteristic points (eg. a SIFT vector);
$NlatchThreshold$ - is a boundary value between points for which correspondences are not discarded (this function is present at step #1 C: Correspondence Search). The use of the adjacency features allows for omitting parametrization of object detection methods known from the prior art.

Each pattern is associated with a set of correspondences and can be considered as VOTING SPACE (step #1 D) for this pattern. The dimensions of the VOTING SPACE include for example X-axis dimension, Y-axis dimension, scale and rotation. However, it is to be noted that more dimensions than the aforementioned four may be applied.

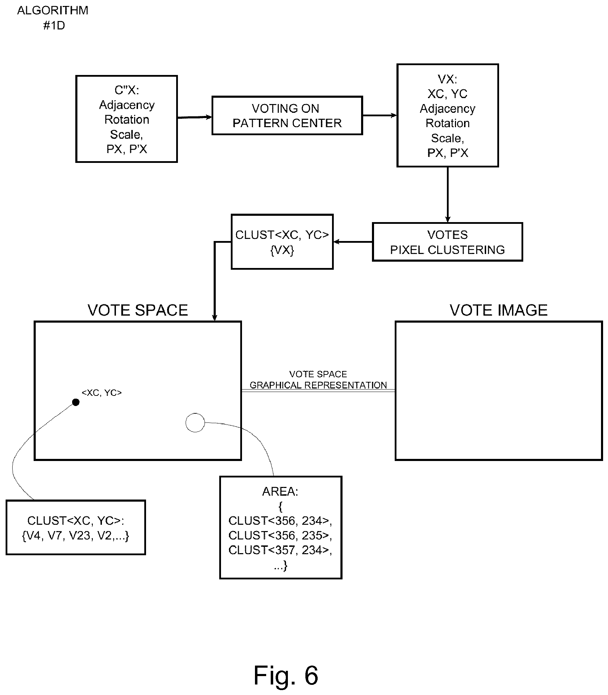

Fig. 6 defines in details step #1D. Each correspondence has sufficient data to calculate respective pattern center position in the Scene. This process is depicted as VOTING ON PATTERN CENTER step, where correspondences C" = {C"1, C"2, C"3, ...} become Votes V={V1, V2, V3, ...}. In the process, each vote gains XC and YC coordinates of the pattern center. Votes are aggregated in groups of the same pattern center of the voted object in dimensions of the image to be processed.

A value of adjacency is further used to create a VOTES IMAGE, which graphically represents votes in the VOTING SPACE. The VOTES IMAGE has the same X and Y dimensions as the input image to be processed (i.e. the same resolution).

In order to change votes data into their graphical representation on the VOTES IMAGE, the following method is applied. For every pixel of the image to be processed (the SCENE) there are collected all votes that vote on that particular pixel as object's center. The adjacency values of these votes are added in order to obtain a map of adjacency sum values for each pixel of the image (and an appropriate section of voting space). The map may be normalized to a range of 0-255 or 0- 1 or other suitable range depending on preferred graphical image format. After normalization, it is possible to display the VOTES IMAGE in a form easily readable and intuitive for a human. In case the map values are interpreted as brightness then the brightest sections will denote the highest number of votes and thereby the highest likelihood of object presence.

In one embodiment, the VOTES IMAGE discards the rotation and scale dimensions for sake of visualization of space suitable for human perception. Scale and rotation data may be used in further algorithm steps.

Further the VOTES IMAGE is processed by finding characteristic points in that particular image (as starting points for votes aggregation process), which simplifies the overall process of objects detection and allows the use of iterative aggregation process instead of classic clustering algorithms.

These characteristic points are considered as potential PROPOSITIONS for centers of the object instance (step #1 E) of a corresponding pattern. The number of these characteristic points may be thousands of times greater than the actual number of the searched patterns in the analyzed image.

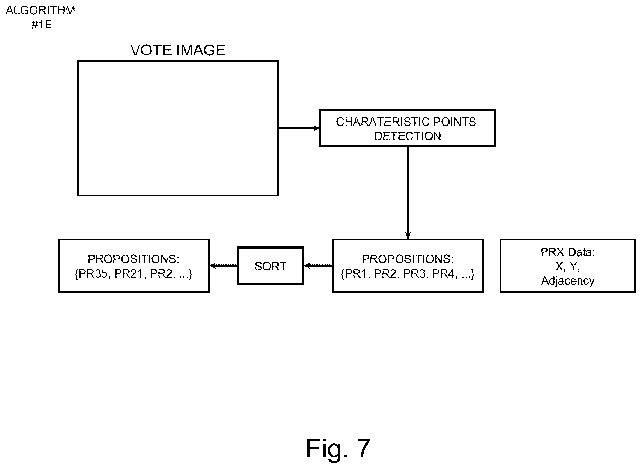

The propositions can be sorted according to adjacency sum of the votes in proposition's position in VOTES IMAGE. The adjacency sum of the votes results from the fact that for each point X, Y there may be a plurality of votes in a voting space and their adjacency feature is summed. Exemplary details of step #1 E are presented in Fig. 7.

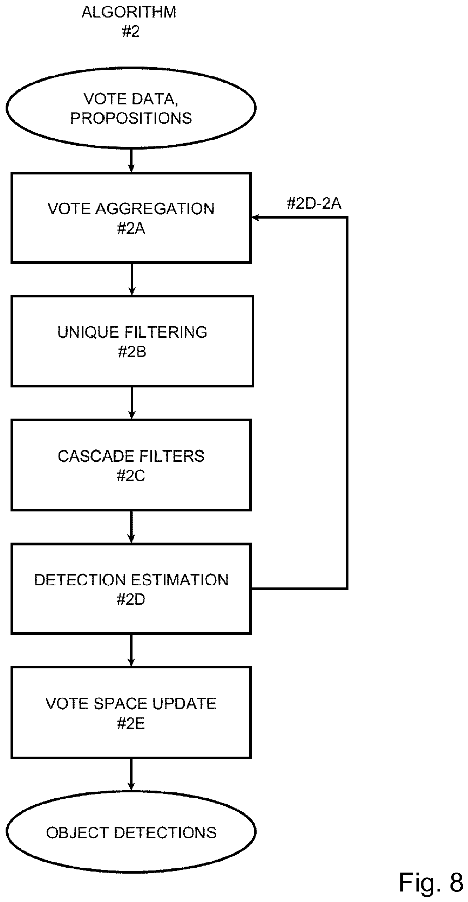

When step #1 of the process is complete, the method advances to step #2 in Fig. 1 wherein voting space is analyzed. This step is of key importance and influences the performance of the solution according to the present invention. Details of this step are presented in Fig. 8 and it includes two passes.

Pass 1:

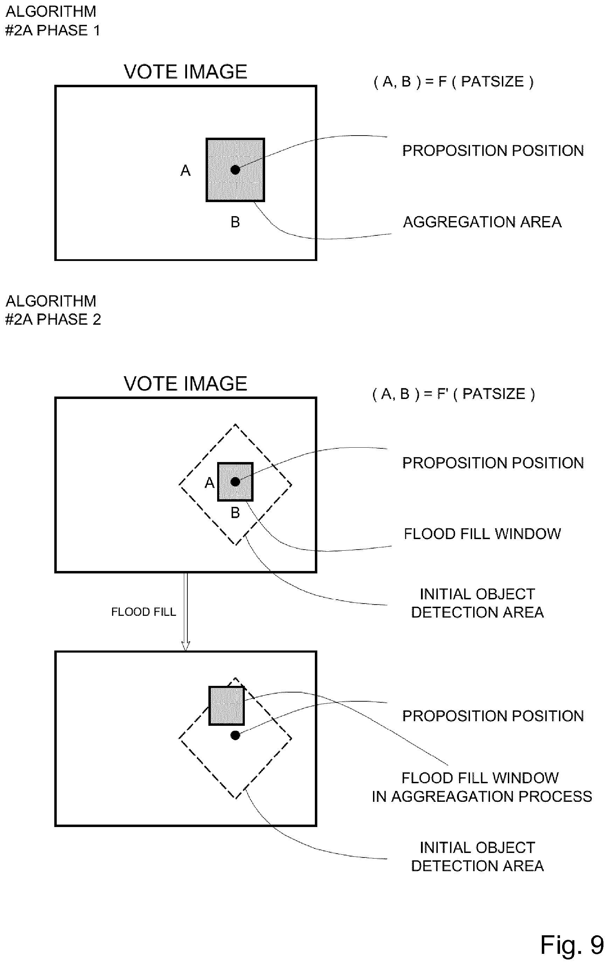

For each proposition, starting from the strongest (with the highest adjacency sum), the aggregation of votes in the VOTING SPACE may be conducted in a local area of proposition's position (step #2A). As shown in Fig. 9, referencing phase 1 of step #2A, the size of the local area depicted as AGGREGATION AREA may be a function of the size of corresponding pattern image. The size of aggregation area is described as a tuple of A and B, that are calculated with an F function. F function takes pattern size (PATSIZE) as an argument as shown on Fig. 9 in #2A PHASE 1 diagram.

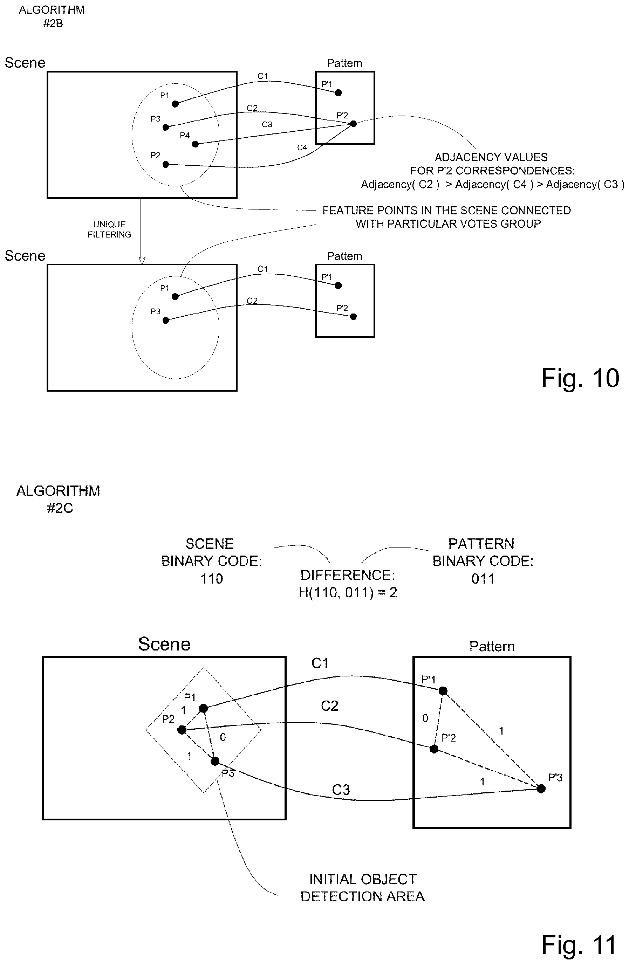

For this group of votes, a unique filtering can be performed, where only the highest adjacency vote corresponding to the same feature point in a pattern is preserved (step #2B). Fig. 10 presents in details step #2B of the method. In this particular example the adjacency value among P'2 corresponding points P3, P4 and P2 is as follows C2 > C4 > C3 meaning that only C2 correspondence between P'2 point and P3 will be preserved.

Subsequently, a cascade filtering may be performed (step #2C). Cascade filters comprise: vote count thresholding and/or adjacency sum thresholding and/or scale variance thresholding and/or, rotation variance thresholding. The cascade may comprise the four aforementioned filters in the order given. In case one of the filters discards vote(s), the process may be stopped for the current proposition and aggregation for another proposition may be started.

The cascade filters discard a whole group of votes aggregated from locality of proposition. For those vote groups, that came through all the cascade filters the method may compute size and rotation of the pattern from aggregated votes data with a center in the corresponding proposition's position in the image (step #2D). The accepted propositions with an initial pattern position, size and rotation may be taken as an input in the second pass of the voting space analysis, which is described below. The input of the second pass creates a constraint for the further aggregation step.

Pass 2 (step #2D-2A).

Pass 2 repeats all steps of Pass 1 but using the initial position, size and rotation data from Pass 1. The method may perform vote aggregation with a FloodFill algorithm from proposition center for each proposition as shown in Fig. 9 step #2A phase 2.

Flood fill, also called seed fill, is an algorithm that determines the area connected to a given node in a multi-dimensional array. It is typically used in the "bucket" fill tool of paint programs to fill connected, similarly-colored areas with a different color. FloodFill's range may be constricted to a scaled down, initial pattern's detection area. Fig. 9 depicts a diagram for Pass 2 of #2A step. FloodFill starts from the PROPOSITION POSITION with FLOOD FILL WINDOW of sizes A x B. A and B values are calculated with a function F' with pattern size as a function's argument. In Phase 2 there is an INITIAL OBJECT DETECTION AREA available that restricts the possible range of FLOOD FILL WINDOW reallocation. The method performs the unique filtering for the second time. Then, the cascade filtering can be performed again but with filter composition change.

The cascade filters in Phase 2 comprise scale variance thresholding and/or rotation variance thresholding and/or feature points binary test and/or global normalised luminescence cross correlation thresholding. The cascade may comprise the four aforementioned filters in the order given.

Fig. 11 presents in details the feature points binary test in step #2C. This example comprises Pattern with three feature points corresponding to three feature points in the Scene image. For each group of feature points the binary code is created through binary luminescence test for each feature point pair. The same order of tests is preserved for the Pattern code and the Scene code. The H function is a Hamming distance function that calculates difference between two codes. The difference is normalized in regards to a number of binary tests and threshold against a particular parameter value.

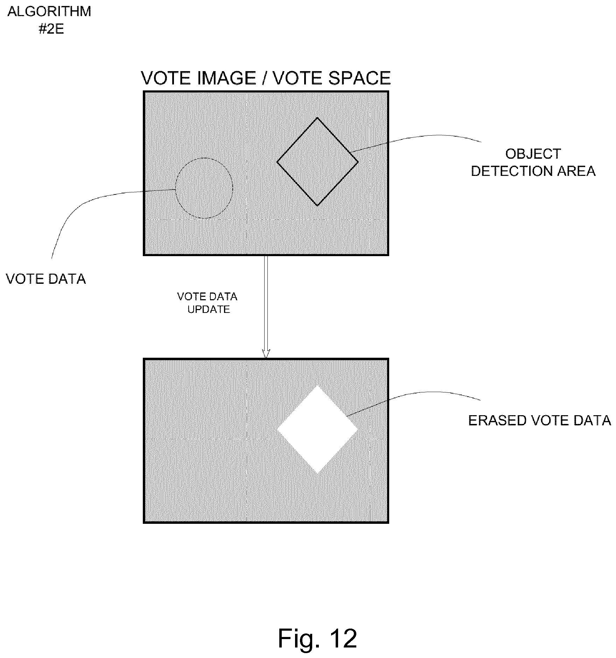

Then the correct object's position, size and rotation is calculated. VOTING SPACE and VOTE IMAGE may be updated through removing vote data placed in the detected object's area. This process is shown in Fig. 12 and is called as VOTE DATA UPDATE. All the data from VOTE SPACE and VOTE IMAGE in OBJECT DETECTION AREA in X and Y dimensions are being erased so the next aggregation process won't use it for another detection.

When step #2 of the process is complete with two passes (more passes may be applied, however the improvements in accuracy of detection are the highest when applying a second pass and subsequent passes improve accuracy only moderately or by small amounts while being heavy on processing resources), the method advances to step #3 in Fig. 1, wherein results consolidation is executed. During such consolidation duplicates may be removed and level of certainty of each detection may be estimated.

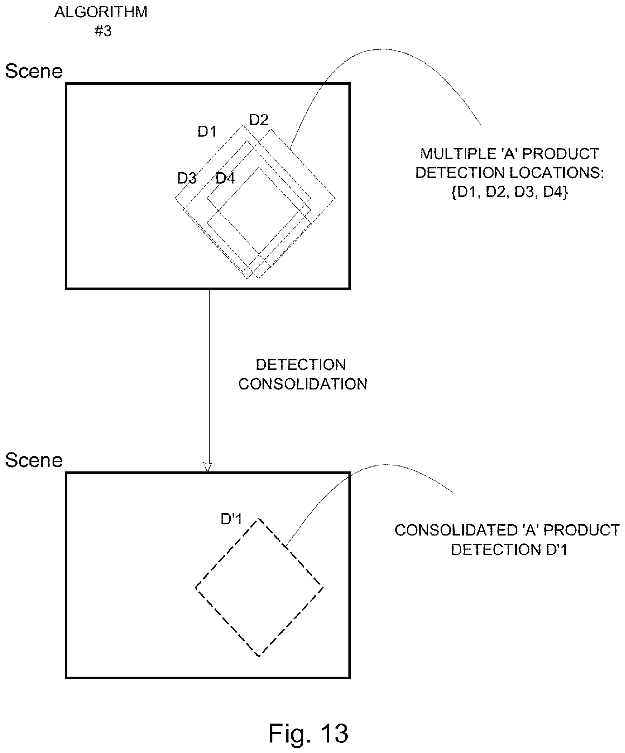

Step #3 of the method searches for overlapping object detections and preserves only those with the highest adjacency of all the votes the particular object detections were based on as shown in Fig. 13. The adjacency of each remaining detection may become the sum of its previous value and the adjacency values of the rejected detections.

For each type of object, its detection instance with the highest adjacency is chosen and extracted from searched image in the QUERY. Those images are taken as a new patterns for corresponding object type and used in the second pass of the algorithm steps #1, #2, #3. The cycle #3-1B may be done only once. At the end of the second pass the resulting detections are considered as true detections.

Feedback loop #3-1B

Those images may be taken as a new pattern for corresponding object type and used in the second pass of the algorithm steps #1, #2, #3. The cycle may be done only once. At the end of the second pass the resulting detections may be considered as true detections and the final result of the recognition process.

The process shown in Fig. 1 comprises two feedback loops, which are very important for the present invention. Preferably, each feedback loop is executed only once for each searched pattern. The feedback loop originating from step #3 uses the best of previous detections of a pattern in the analyzed image for each pattern and treats it as a new pattern. The new pattern must be processed starting from step #1.

The additional results obtained by this feedback loop improve system's efficiency. The feedback loop covering only step #2 uses partial results or internal processing mechanisms in order to execute again the processing steps while applying additional data thereby decreasing the number of false detections.

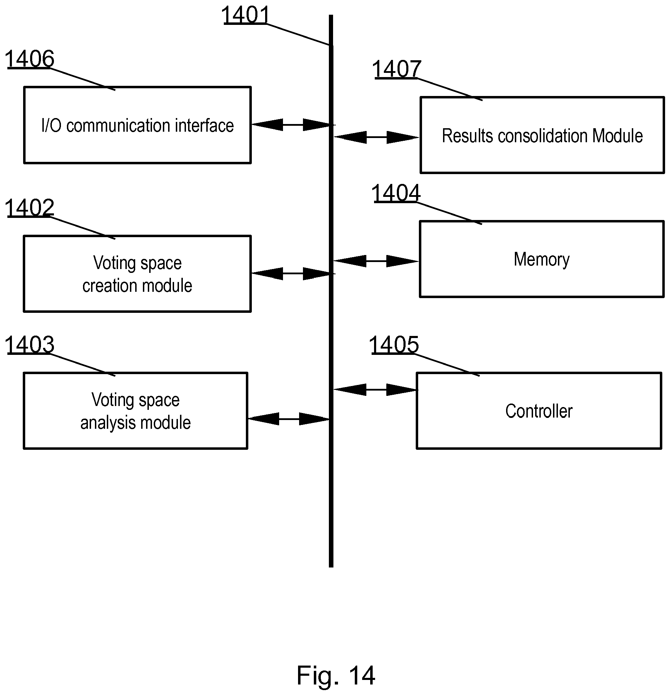

Fig. 14 presents a diagram of the system according to the present invention. The system may be realized using dedicated components or custom made FPGA or ASIC circuits. The system comprises a data bus 1401 communicatively coupled to a memory 1404 (such as a non-transitory FLASH-type memory). Additionally, other components of the system are communicatively coupled to the system bus 1401 so that they may be managed by a controller 1405.

The memory 1404 may store computer program or programs executed by the controller 1405 in order to execute steps of the method according to the present invention. Additionally, the memory 1404 may store the input data as well as partial and final results of input data processing.

The system further comprises an I/O communication interface 1406 allowing for reading input data and outputting results data. Such an interface may be a USB interface for example.

The additional components include a voting space creation module 1402 configured to execute step #1 of the method, a voting space analysis module 1403 configured to execute step #2 of the method and a results consolidation module 1407 configured to execute step #3 of the method.

The method according to the present invention does not comprise a clustering mechanism. Clustering of a problem generally divides the problem into separate subsets for which it is assumed that they comprise zero or one instance of an object.

The present invention uses in turn an iterative votes aggregation process around a proposition. After each aggregation, there is executed a filtering and search for a pattern in the aggregated data.

In case the pattern instance is found, the votes concerning this aggregation are removed from the voting space, which ensures that the generated subsets, in which the pattern is searched are disjoint.

The iterative character of the method as well as aggregation and analysis of sets from the strongest propositions distinguishes this approach from clustering. It is important that according to the present method when an aggregated data set will not be found to be a pattern and in fact is one of the two below cases:

- the set comprises only a small section of the pattern;

- the set comprises data of several patterns;

then the set will not be removed from the voting space and may help in analysis of subsequent propositions. In case of clustering such sets would be marked as not comprising the object and discarded leading to decrease in efficiency of pattern detection.

It is worth noting that the present method of division of voting space gives different sets for different patterns, which means the method is linked with a specific task and the search logic of patterns in the analyzed image. The classic clustering would always result in the same division of the set regardless of the pattern.

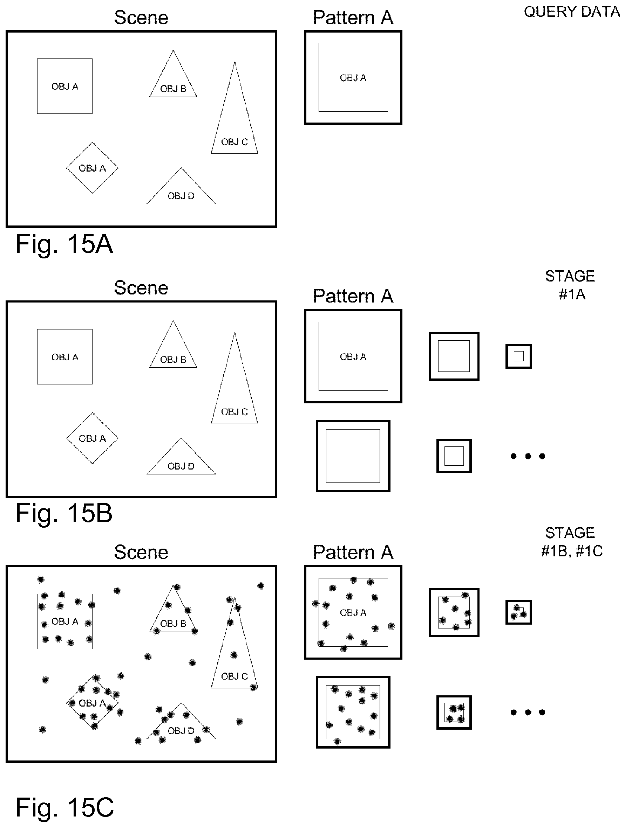

Figs. 15A-F present exemplary input image, a pattern to be found in this input image and processing results available during execution of the method according to the present invention.

In Fig. 15A an exemplary QUERY DATA comprise an input image (scene) and a pattern (Pattern A). The scene comprises objects the count of and type of is unknown to the system. Human eye will easily determine that there are two squares (OBJ A) in the scene, for which a pattern is provided (a square with vertical edges and a rotated square) and there are three other objects, for which a pattern is not provided.

During STAGE #1A in Fig. 15B, as previously explained, there is shown pattern scaling and storing of multiple pattern copies having different sizes.

In Fig. 15C there are depicted detected characteristic points on all images. These characteristic points have an abstract character as their detection does not alter images data. Herein the characteristic points are shown in order to better exemplify the process according to the present invention. A state presented in Fig. 15C corresponds to stages #1B and #1C of the method according to the present invention.

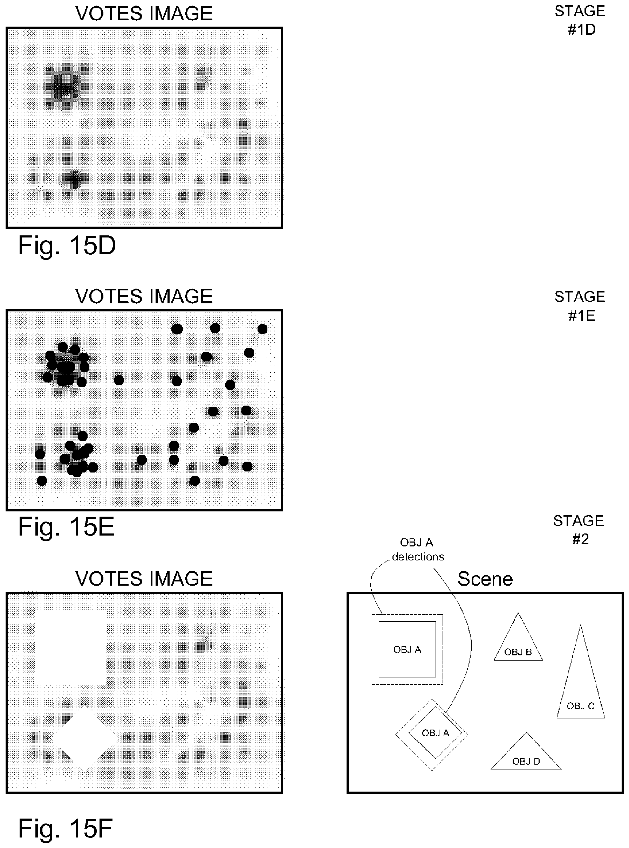

During STAGE #1D shown in Fig. 15D, as previously explained, there is created a votes image. As can be seen the votes concentrate in locations where OBJ A instances are present in the input scene.

At STAGE #1E in Fig. 15E there are found characteristic points in the votes image in order to identify propositions for aggregation process. These points have abstract character and their detection does not alter the data of any input or temporary images stored in the memory.

At STAGE #2 shown in Fig. 15F there is executed votes aggregation and cascade filtering. The diagram presents a stage when the method has detected two objects and votes associated with them have been removed from the votes image. Accordingly, appropriate data have also been physically removed from the votes image, which is depicted as empty, white sections matching marked areas in the scene. The marking of objects in the scene is abstract (only for the purposes of presenting an example) as during the process images data are not modified in the memory.

It can be easily recognized, by one skilled in the art, that the aforementioned method for multi-object detection in a digital image may be performed and/or controlled by one or more computer programs. Such computer programs are typically executed by utilizing the computing resources in a computing device. Applications are stored on a non-transitory medium. An example of a non-transitory medium is a non-volatile memory, for example a flash memory or volatile memory, for example RAM. The computer instructions are executed by a processor. These memories are exemplary recording media for storing computer programs comprising computer-executable instructions performing all the steps of the computer-implemented method according the technical concept presented herein.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein.

Accordingly, the scope of protection is not limited to the preferred embodiments described in the specification, but is only limited by the claims that follow.

**Claims**

1. Method for object detection in a digital image, the method comprising the steps of:

- receiving at least one pattern representing an object and an input image to be processed;
- finding feature points in the at least one pattern and the input image wherein a feature point is a characteristic point including its features that comprise position in the input image (X, Y), scale, rotation, color and contrast data;
- for each pattern image matching the pattern's characteristic points against the characteristic points in the input image in order to define points correspondences;

the method being **characterized in that** it further comprises the steps of:

(a) considering each points correspondence as a vote, for a particular pattern with a particular position, scale and rotation assuming the same relative position with respect to the coordinates of the pattern center of the characteristic points in the pattern and respective object instance present in the input image, and for each vote determining an adjacency value which denotes a level of match between the corresponding points whereas the votes create a voting space;

(b) discarding votes having the adjacency value below a predefined threshold;

(c) for each pixel, of the input image, adding the adjacency values of the remaining votes to create a votes image that graphically represents votes in the input image;

(d) detecting characteristic points in the votes image as potential propositions for centers of the object instance of a corresponding pattern;

(e) sorting the propositions in the votes image according to adjacency sum;

(f) for each proposition, starting from the one with the highest adjacency sum, conducting aggregation of votes over an aggregation area centered at the x, y position of the proposition in the voting space;

(g) filtering the aggregated votes such that only the highest adjacency vote, corresponding to the same feature point in a pattern is preserved while the other votes are discarded;

(h) taking the filtered votes as input to a second pass of steps (f) and (g) of the voting space analysis wherein the input of the second pass creates a location constraint for the aggregation of step (f) by using position, size and rotation of the pattern computed from the filtered votes;

(i) executing results consolidation wherein during such consolidation overlapping object detections are searched and only those with the highest adjacency value, of all of the votes the particular object detections were based on, are preserved;

(j) taking the chosen detection instance as a new pattern for corresponding object and executing a second pass of the method.

2. The method according to claim 1 **characterized in that** each pattern image is resized to generate multiple patterns of different sizes.

3. The method according to claim 1 **characterized in that** the characteristic points are detected, in the input image, with the SIFT (Scale-invariant feature transform) or the SURF (Speeded Up Robust Features) method.

4. The method according to claim 1 **characterized in that** the adjacency feature is obtained by transforming points correspondence contrast data difference with the following function:

$$Adjacency\left(p1, p2\right) = 1.0 f - \left(\frac{dist\left(p1, p2\right)}{MatchThreshold}\right)^2$$

wherein:

$p1$, $p2$ - is a pair of characteristic points

*Match Threshold* - a boundary value between points, for which correspondences are not discarded.

5. A computer program comprising program code means for performing all the steps of the computer-implemented method according to claim 1 when said program is run on a computer.

6. A computer readable medium storing computer-executable instructions performing all the steps of the computer-implemented method according to claim 1 when executed on a computer.

7. System for object detection in a digital image, the system comprising:

• a data bus (1401); a memory (1404) communicatively coupled to the data bus (1401);
• a controller (1405) communicatively coupled to the data bus (1401);

the system being **characterized in that**:

> • the controller (1405) is configured to execute steps of the method according to claim 1.

**Patentansprüche**

1. Verfahren zur Objektdetektion in einem digitalen Bild, wobei das Verfahren die folgenden Schritte beinhaltet:

> • Empfangen von mindestens einem Muster, das ein Objekt repräsentiert, und eines zu verarbeitenden Eingabebildes;
> • Finden von Merkmalpunkten in dem mindestens einen Muster und dem Eingabebild, wobei ein Merkmalpunkt ein charakteristischer Punkt ist, umfassend seine Merkmale, die Position im Eingabebild (X, Y), Skala, Rotation, Farbe und Kontrastdaten beinhalten;
> • für jedes Muster Bildabgleichen der charakteristischen Punkte des Musters gegen die charakteristischen Punkte im Eingabebild, um Punktentsprechungen zu definieren;

> wobei das Verfahren **dadurch gekennzeichnet ist, dass** es ferner die folgenden Schritte beinhaltet:

> a) Betrachten von jeder Punktentsprechung als Vote, für ein bestimmtes Muster mit einer bestimmten Position, Skala und Rotation, unter Annahme der gleichen relativen Position mit Bezug auf die Koordinaten des Musterzentrums der charakteristischen Punkte im Muster und eweiligen im Eingabebild vorliegenden Objektinstanz, und für jede Vote Bestimmen eines Adjazenzwertes, der ein Abgleichsniveau zwischen den entsprechenden Punkten kennzeichnet, während die Voten einen Votenraum erzeugen;
> b) Verwerfen von Voten, die den Adjazenzwert unter einer vordefinierten Schwelle aufweisen;
> c) für jedes Pixel, des Eingabebildes, Addieren der Adjazenzwerte der restlichen Voten, um ein Votenbild zu erzeugen, das Voten im Eingabebild grafisch repräsentiert;
> d) Detektieren von charakteristischen Punkten im Votenbild als potentielle Propositionen für Zentren der Objektinstanz eines entsprechenden Musters;
> e) Sortieren der Propositionen im Votenbild gemäß der Adjazenzsumme;
> f) für jede Proposition, beginnend ab der der höchsten Adjazenzsumme, Vornehmen einer Aggregation von Voten über einem Aggregationsbereich, zentriert an der x-, y-Position der Proposition im Votenraum;
> g) Filtern der aggregierten Voten, sodass nur die höchste Adjazenzvote, dem gleichen Merkmalpunkt in einem Muster entsprechend, bewahrt wird, während die anderen Voten verworfen werden;
> h) Nehmen der gefilterten Voten als Eingabe für einen zweiten Durchgang der Schritte (f) und (g) der Votenraumanalyse, wobei die Eingabe für den zweiten Durchgang eine Lageneinschränkung für die Aggregation von Schritt (f) durch Verwenden von Position, Größe und Rotation des aus den gefilterten Voten berechneten Musters erzeugt;
> i) Ausführen einer Ergebniskonsolidierung, wobei während einer solchen Konsolidierung überlappende Objektdetektionen gesucht werden und nur jene mit dem höchsten Adjazenzwert, von allen Voten, worauf die bestimmten Objektdetektionen basierten, bewahrt werden;
> j) Nehmen der gewählten Detektionsinstanz als neues Muster für entsprechendes Objekt und Ausführen eines zweiten Durchgangs des Verfahrens.

2. Verfahren gemäß Anspruch 1, **dadurch gekennzeichnet, dass** die Größe von jedem Musterbild geändert wird, um mehrfache Muster von unterschiedlichen Größen zu generieren.

3. Verfahren gemäß Anspruch 1, **dadurch gekennzeichnet, dass** die charakteristischen Punkte, im Eingabebild, mit dem SIFT(Scale-invariant feature transform) oder dem SURF(Speeded Up Robust Features)-Verfahren detektiert werden.

4. Verfahren gemäß Anspruch 1, **dadurch gekennzeichnet, dass** das Adjazenzmerkmal durch Transformieren von Punktentsprechungskontrastdatendifferenz mit der folgenden Funktion erhalten wird:

$$\text{Adjazenz}\,(p1, p2) = 1.0 f - \left(\frac{dist(p1,p2)}{MatchThreshold}\right)^2$$

wobei:

p1, p2 - ein Paar charakteristischer Punkte ist
*Match Threshold* (Abgleichsschwelle) - ein Grenzwert zwischen Punkten ist, wofür Entsprechungen nicht verworfen werden.

5. Computerprogramm, das Programmcodemittel zum Durchführen aller Schritte des computerimplementierten Verfahrens gemäß Anspruch 1 beinhaltet, wenn das Programm auf einem Computer läuft.

6. Computerlesbares Medium, das computerausführbare Anweisungen speichert, welche alle Schritte des computerimplementierten Verfahrens gemäß Anspruch 1 durchführen, wenn sie auf einem Computer ausgeführt werden.

7. System zur Objektdetektion in einem digitalen Bild, wobei das System die folgenden Schritte beinhaltet:

- einen Datenbus (1401); einen Speicher (1404), der kommunikativ mit dem Datenbus (1401) gekoppelt ist;
- eine Steuereinheit (1405), die kommunikativ mit dem Datenbus (1401) gekoppelt ist;

wobei das System **dadurch gekennzeichnet ist, dass**

- die Steuereinheit (1405) konfiguriert ist, um Schritte des Verfahrens gemäß Anspruch 1 auszuführen.

**Revendications**

1. Procédé de détection d'objet dans une image numérique, ledit procédé comprenant les étapes de :

- réception d'au moins un motif représentant un objet et une image d'entrée à traiter ;
- découverte des points de caractéristiques dans le au moins un motif et l'image d'entrée, un point de caractéristiques étant un point caractéristique comprenant ses caractéristiques qui comprennent une position dans l'image d'entrée (X, Y), une échelle, une rotation, une couleur et des données de contraste ;
- mise en correspondance des points caractéristiques du motif avec les points caractéristiques dans l'image d'entrée, pour chaque image de motif, dans le but de définir des correspondances de points ;

ledit procédé étant **caractérisé en ce qu'**il comprend en outre les étapes de :

(a) considération de chaque correspondance de points comme un vote, pour un motif particulier avec une position , une échelle et une rotation particulières supposant la même position relative par rapport aux coordonnées du centre du motif des points caractéristiques dans le motif et une instance d'objet respective présente dans l'image d'entrée, et pour chaque vote détermination d'une valeur d'adjacence qui indique un niveau de correspondance entre les points correspondants alors que les votes créent un espace de vote ;
(b) rejet des votes possédant leur valeur d'adjacence en dessous un seuil prédéfini ;
(c) pour chaque pixel de l'image d'entrée, addition des valeurs d'adjacence des votes restants pour créer une image de votes qui représente graphiquement les votes dans l'image d'entrée ;
(d) détection des points caractéristiques dans l'image de votes comme des propositions potentielles pour des centres de l'instance d'objet d'un motif correspondant ;
(e) tri des propositions dans l'image de votes selon la somme d'adjacence ;
(f) pour chaque proposition, en commençant par celle qui a la somme d'adjacence la plus élevée, réalisation de l'agrégation des votes sur une zone d'agrégation centrée en la position x, y de la proposition dans l'espace de vote ;
(g) filtrage des votes agrégés de sorte qu'uniquement le vote d'adjacence le plus élevé, correspondant au même point de caractéristiques dans un motif soit préservé tandis que les autres votes sont rej etés ;
(h) prise en compte des votes filtrés comme entrées d'un second passage des étapes (f) et (g) de l'analyse d'espace de vote, ladite entrée du second passage créant une contrainte d'emplacement pour l'agrégation de l'étape (f) par l'utilisation de la position, la taille et la rotation du motif calculé à partir des votes filtrés ;
(i) exécution de la consolidation des résultats pour laquelle durant une telle consolidation les détections d'objets se chevauchant sont recherchées et uniquement ceux avec la valeur d'adjacence la plus élevée, de tous les votes sur lesquelles les détections d'objet particulier sont basées, sont préservés ;
(j) prise en compte de l'instance de détection d'objet choisie comme un nouveau motif pour la correspondance d'objet et l'exécution d'un seconde passage du procédé.

2. Procédé selon la revendication 1, **caractérisé en ce que** chaque image de motif est redimensionnée afin de générer des motifs multiples de tailles différentes.

3. Procédé selon la revendication 1 **caractérisé en ce que** les points caractéristiques sont détectés, dans l'image d'entrée, avec le procédé SIFT (transformée de caractéristiques visuelles invariante à l'échelle) ou le procédé SURF (caractéristiques robustes accélérées).

4. Procédé selon la revendication 1 **caractérisé en ce que** la caractéristique d'adjacence est obtenue par transformation de la différence de données de contraste de correspondance de points avec la fonction suivante :

$$Adjacence\ (p1, p2) = 1,0f - \left( \frac{dist(p1, p2)}{Seuil\ de\ correspondance} \right)^2$$

*p1,p2* - étant une paire de points caractéristiques
*Seuil de correspondance* - étant une valeur limite entre points, pour laquelle les correspondances ne sont pas rejetées.

5. Programme informatique comprenant des moyens de code de programme permettant d'effectuer toutes les étapes du procédé mis en oeuvre par ordinateur selon la revendication 1 lorsque ledit programme est exécuté sur un ordinateur.

6. Support lisible par ordinateur stockant des instructions exécutables par ordinateur effectuant toutes les étapes du procédé mis en oeuvre par ordinateur selon la revendication 1 lors de son exécution sur un ordinateur.

7. Système permettant la détection d'objet dans une image numérique, le système comprenant :

   • un bus de données (1401) ; une mémoire (1404) couplée en communication au bus de données (1401) ;
   • un contrôleur (1405) couplé en communication au bus de données (1401) ;

le système étant **caractérisé en ce que** :

   • le contrôleur (1405) est configuré pour exécuter les étapes du procédé selon la revendication 1.

FULL
ALGORITHM

QUERY:
SCENE, PATTERNS
#0

PREPROCESSING:
VOTE SPACE CREATION
#1

#3-1B

#2DA

PROCESSING:
VOTE SPACE ANALYSIS
#2

POSTPROCESSING:
RESULTS CONSOLIDATION
#3

RESULTS:
OBJECT LOCATIONS
#4

Fig. 1

ALGORITHM
#1

```
        ┌───────────────────┐
        │    QUERY DATA     │
        └───────────────────┘
                  │
                  ▼
        ┌───────────────────┐
        │  RESIZE PATTERNS  │
        │       #1A         │
        └───────────────────┘
                  │
                  ▼
        ┌───────────────────┐
        │  FEATURE POINTS   │
        │    EXTRACTION     │
        │       #1B         │
        └───────────────────┘
                  │
                  ▼
        ┌───────────────────┐
        │  CORRESPONDENCE   │
        │      SEARCH       │
        │       #1C         │
        └───────────────────┘
                  │
                  ▼
        ┌───────────────────┐
        │VOTE SPACE CREATION│
        │       #1D         │
        └───────────────────┘
                  │
                  ▼
        ┌───────────────────┐
        │ PROPOSITION SEARCH│
        │       #1E         │
        └───────────────────┘
                  │
                  ▼
        ┌───────────────────┐
        │    VOTE DATA,     │
        │   PROPOSITIONS    │
        └───────────────────┘
```

Fig. 2

ALGORITHM
#1A

IMG

Scale 1  Scale 0.5  Scale 0.25  Scale 0.125

Pattern 1A-1 | Object 1 | Resize

Pattern 1B-1 | Object 1 | Resize

Pattern 2A-1 | Object 2 | Resize

Pattern 2A-0.25

Fig. 3

Scene and Query Data

CHARACTERISTIC
POINTS DETECTION

Scene and Query Data with points

P3  P4
P2  P1

P8
P5
P6
P7

FEATURE EXTRACTION

P1
P2
P3
P4
...

PX Data:
X, Y,
Orientation,
Scale,
Contrast Data,
Color Data

Fig. 4

ALGORITHM
#1C

Fig. 5

ALGORITHM
#1D

```
┌──────────────┐        ┌──────────────────┐      ┌──────────────┐
│    C"X:      │        │                  │      │     VX:      │
│  Adjacency   │───────▶│   VOTING ON      │─────▶│   XC, YC     │
│  Rotation    │        │ PATTERN CENTER   │      │  Adjacency   │
│   Scale,     │        │                  │      │  Rotation    │
│  PX, P'X     │        └──────────────────┘      │   Scale,     │
└──────────────┘                                  │  PX, P'X     │
                                                  └──────────────┘
                      ┌──────────────┐      ┌──────────────────┐
                      │ CLUST<XC, YC>│◀─────│     VOTES        │
                      │    {VX}      │      │ PIXEL CLUSTERING │
                      └──────────────┘      └──────────────────┘
```

VOTE SPACE                                          VOTE IMAGE

<XC, YC>

VOTE SPACE
GRAPHICAL REPRESENTATION

CLUST<XC, YC>:
{V4, V7, V23, V2,...}

AREA:
{
CLUST<356, 234>,
CLUST<356, 235>,
CLUST<357, 234>,
...}

# Fig. 6

ALGORITHM
#1E

VOTE IMAGE

CHARATERISTIC POINTS
DETECTION

PROPOSITIONS:
{PR35, PR21, PR2, ...}

SORT

PROPOSITIONS:
{PR1, PR2, PR3, PR4, ...}

PRX Data:
X, Y,
Adjacency

# Fig. 7

ALGORITHM
#2

VOTE DATA,
PROPOSITIONS

VOTE AGGREGATION
#2A

#2D-2A

UNIQUE FILTERING
#2B

CASCADE FILTERS
#2C

DETECTION ESTIMATION
#2D

VOTE SPACE UPDATE
#2E

OBJECT DETECTIONS

Fig. 8

ALGORITHM
#2A PHASE 1

VOTE IMAGE

( A, B ) = F ( PATSIZE )

A          B

PROPOSITION POSITION

AGGREGATION AREA

ALGORITHM
#2A PHASE 2

VOTE IMAGE

( A, B ) = F' ( PATSIZE )

A          B

PROPOSITION POSITION

FLOOD FILL WINDOW

INITIAL OBJECT
DETECTION AREA

FLOOD FILL

PROPOSITION POSITION

FLOOD FILL WINDOW
IN AGGREAGATION PROCESS

INITIAL OBJECT
DETECTION AREA

Fig. 9

ALGORITHM
#2B

Scene

Pattern

P1

P3

P4

P2

C1

C2

C3

C4

P'1

P'2

ADJACENCY VALUES
FOR P'2 CORRESPONDENCES:
Adjacency( C2 ) > Adjacency( C4 ) > Adjacency( C3 )

FEATURE POINTS IN THE SCENE CONNECTED
WITH PARTICULAR VOTES GROUP

UNIQUE
FILTERING

Scene

Pattern

P1

P3

C1

C2

P'1

P'2

# Fig. 10

ALGORITHM
#2C

SCENE
BINARY CODE:
110

DIFFERENCE:
H(110, 011) = 2

PATTERN
BINARY CODE:
011

Scene

Pattern

C1

C2

C3

P1

P2

P3

1

0

1

P'1

P'2

P'3

0

1

1

INITIAL OBJECT
DETECTION AREA

# Fig. 11

ALGORITHM
#2E

VOTE IMAGE / VOTE SPACE

OBJECT
DETECTION AREA

VOTE DATA

VOTE DATA
UPDATE

ERASED VOTE DATA

Fig. 12

ALGORITHM
#3

Scene

D1  D2
D3  D4

MULTIPLE 'A' PRODUCT
DETECTION LOCATIONS:
{D1, D2, D3, D4}

DETECTION
CONSOLIDATION

Scene

D'1

CONSOLIDATED 'A' PRODUCT
DETECTION D'1

Fig. 13

1401

1406

I/O communication interface

1407

Results consolidation Module

1402

Voting space
creation module

1404

Memory

1403

Voting space
analysis module

1405

Controller

Fig. 14

Scene

Pattern A

QUERY DATA

OBJ A

OBJ B

OBJ C

OBJ A

OBJ D

OBJ A

## Fig. 15A

Scene

Pattern A

STAGE
#1A

OBJ A

OBJ B

OBJ C

OBJ A

OBJ A

OBJ D

• • •

## Fig. 15B

Scene

Pattern A

STAGE
#1B, #1C

OBJ A

OBJ B

OBJ C

OBJ A

OBJ A

OBJ D

• • •

## Fig. 15C

VOTES IMAGE

STAGE
#1D

Fig. 15D

VOTES IMAGE

STAGE
#1E

Fig. 15E

STAGE
#2

OBJ A
detections

VOTES IMAGE

Scene

OBJ A

OBJ B

OBJ C

OBJ A

OBJ D

Fig. 15F

**EP 2 993 623 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 2469468 A1

### Non-patent literature cited in the description

- **LOWE, DAVID G.** Object recognition from local scale-invariant features. *Proceedings of the International Conference on Computer,* 1999, 1150-1157
- **HERBERT BAY ; ANDREAS ESS ; TINNE TUYTELAARS ; LUC VAN GOOL.** SURF: Speeded Up Robust Features. *Computer Vision and Image Understanding (CVIU),* 2008, vol. 110 (3), 346-359
- **KE, Y. ; SUKTHANKAR, R.** PCA-SIFT: A More Distinctive Representation for Local Image Descriptors. *Computer Vision and Pattern Recognition,* 2004
- **JEAN-MICHEL MOREL ; GUOSHEN YU.** ASIFT: A New Framework for Fully Affine Invariant Image Comparison. *SIAM J. IMAGING SCIENCES, 2009 Society for Industrial and Applied Mathematics,* vol. 2 (2), 438-469
- **PATRICIO LONCOMILLA ; JAVIER RUIZ-DEL-SOLAR.** A Fast Probabilistic Model for Hypothesis Rejection in SIFT-Based Object Recognition. Department of Electrical Engineering, Universidad de Chile
- **DAVID G. LOWE.** Distinctive Image Features from Scale-Invariant Keypoints. Computer Science Department, University of British Columbia
- **PEDRAM AZAD ; TAMIM ASFOUR ; RUDIGER DILLMANN.** Combining Harris Interest Points and the SIFT Descriptor for Fast Scale-Invariant Object Recognition. Institute for Anthropomatics, University of Karlsruhe
- **STEFAN ZICKLER ; ALEXEI EFROS.** Detection of Multiple Deformable Objects using PCA-SIFT. Computer Science Department, Carnegie Mellon University
- **STEFAN ZICKLER ; MANUELA M. VELOSO.** Detection and Localization of Multiple Objects. Computer Science Department, Carnegie Mellon University